# EUROPÄISCHE PATENTSCHRIFT

(11) **EP 1 524 454 B1**
(45) Veröffentlichungstag und Bekanntmachung des Hinweises auf die Patenterteilung: **05.07.2006**
(21) Anmeldenummer: 04013299.5
(22) Anmeldetag: 05.06.2004
(51) Int. Cl.: F16H 19/06, F16G 13/18

(54) **Kettentrieb und Betätigungsvorrichtung mit einem solchen Kettentrieb**
Chain drive and operating device having such a chain drive
Entrainement de chaîne et dispositif d'actionnement comprenant un tel entrainement de chaîne

(30) Priorität: 17.10.2003 DE 10348299
(43) Veröffentlichungstag der Anmeldung: 20.04.2005
(73) Patentinhaber: Stolzer, Paul, 77855 Achern (DE)
(72) Erfinder: Stolzer, Paul, 77855 Achern (DE)
(74) Vertreter: Lasch, Hartmut

(56) Entgegenhaltungen:
- DE-C- 10 006 165
- FR-A- 1 392 636
- US-A- 4 481 005

## Beschreibung

Die Erfindung betrifft einen Kettentrieb mit wenigstens einer Kette mit einer Mehrzahl von Kettengliedern, welche durch Niete verbundene Außen- und Innenlaschen aufweisen, sowie eine Betätigungsvorrichtung zum Antrieb von hin- und herbewegbaren Bauelementen, wie Plattformen, Hebebühnen, Hubleitern, Laufkatzen, Kranen, Toren oder dergleichen, welche mit einem solchen Kettentrieb ausgestattet ist.

Die FR-A-1 392 636 zeigt einen ketten trieb gemäß dem oberbegriff des Anspuchs 1.

Zum Antrieb von bewegbaren Bauelementen, wie stationären oder auf einem fahrbaren Chassis angeordneten Hebebühnen, Hubleitern, Laufkatzen, Kranen oder dergleichen, sowie von Gebäudeelementen, wie Plattformen, Türen oder Toren, insbesondere von Parkhäusern, Garagen, Industrieanlagen etc., finden vornehmlich Ketten- oder Zahnstangentriebe Verwendung, welche mit einem Kraftübertragungsmittel in Form von Zahn- oder Kettenrädern, die mit der Kette bzw. der Zahnstange im Eingriff stehen, wirkverbunden sind. Dabei kann der Ketten- bzw. Zahnstangentrieb stationär und das Kraftübertragungsmittel entlang dem Ketten- bzw. Zahnstangentrieb hin- und herbewegbar sein, oder das Kraftübertragungsmittel ist stationär und der Ketten- bzw. Zahnstangentrieb ist - von dem Kraftübertragungsmittel angetrieben - entlang einer Führung hin- und herbewegbar.

Zahnstangentriebe sind relativ robust und weisen eine hohe Laufruhe auf. Überdies erfahren sie auch unter hoher Last keine oder nur vernachlässigbare Längenänderungen infolge Dehnungen oder Stauchungen des Materials, so daß eine exakte Positionsbestimmung des mit dem Zahnstangentrieb im Eingriff stehenden Kraftübertragungsmittels relativ zu dem Zahnstangentrieb in Abhängigkeit der Umdrehungen des Kraftübertragungsmittels möglich ist. Indes erfordern Zahnstangentriebe einen verhältnismäßig hohen Fertigungs- und folglich Investitionsaufwand und sind diese empfindlich gegen Verschleiß, da beim Eingriff des Kraftübertragungsmittels in den Zahnstangentrieb neben Rollreibung praktisch zwangsläufig auch Gleitreibung herrscht.

Demgegenüber sind Kettentriebe erheblich kostengünstiger, jedoch in der Stabilität unterlegen, so daß der maximalen Traglast nach oben hin Grenzen gesetzt sind. Darüber hinaus erfahren Kettentrieb unter Last infolge ihrer gegenüber Zahnstangentriebe geringeren Steifigkeit nicht mehr zu vernachlässigende Längenänderungen, so daß eine genaue Positionsbestimmung des mit dem Kettentrieb im Eingriff stehenden Kraftübertragungsmittels relativ zu dem Kettentrieb allein in Abhängigkeit der Umdrehungen des Kraftübertragungsmittels nicht möglich ist und zusätzliche Einrichtungen zur Positionserfassung, wie Sensoren oder dergleichen, erforderlich sind. Ein weiterer Vorteil von Kettentrieben besteht indes in ihrem äußerst verschleißarmen Betrieb, da sich die Geometrie des Kraftübertragungsmittels problemlos derart anpassen läßt, daß beim Eingriff desselben in den Kettentrieb praktisch nur Rollreibung auftritt. Ferner ist in manchen Fällen die Gelenkigkeit von Kettentrieben im Hinblick auf einen raumsparenden Einbau, z.B. unter Einsatz von Umlenkrädern, oder hinsichtlich einer individuellen Anpassung des Verlaufs des Kettentriebes von Vorteil.

Die DE 71 31 135 U1 beschreibt einen Stellantrieb mit einer Schubstange, an deren einem Antriebsorgan in Form eines Ritzels zugewandten Längsseite eine Kette verspannt ist. Zur Befestigung der Kette an der Schubstange ist vorgesehen, daß die endständigen Glieder der Kette mittels diese übergreifenden Halteelementen in Form von Übergreiflaschen im Bereich der Enden der Schubstange fixiert sind, während die restliche Kette auf der Schubstange entlang deren Erstreckungsrichtung aufliegt. Zum Verspannen der Kette sind die Übergreiflaschen in Langlöchern der Schubstange verstellbar festgelegt. Zur seitlichen Führung der Kette sind an den entgegengesetzten Längsseiten derselben angeordnete Winkelstreben vorgesehen, welche starr an der Schubstange befestigt sind. Indes läßt sich mit dem bekannten Kettentrieb weder die maximale Traglast erhöhen, noch werden Längenänderungen der Kette unter Last zuverlässig vermieden, da die Kette praktisch entlang ihrer gesamten Erstreckungsrichtung lediglich auf der Schubstange aufliegt. Die Traglast der Kette wird sogar reduziert, da zusätzlich zu der von dem Ritzel auf die Kette übertragenen Last die Kette unter Vorspannung steht. Schließlich wird die gesamte, von dem Ritzel an die Kette übertragene Last je nach Drehrichtung des Ritzels entweder über die eine oder über die andere, am entgegengesetzten Ende der Kette festgelegten Übergreiflasche auf die Schubstange übertragen, was der maximalen Traglast der gesamten Anordnung wiederum Grenzen setzt.

Der Erfindung liegt die Aufgabe zugrunde, einen Kettentrieb der eingangs genannten Art auf einfache und kostengünstige Weise derart weiterzubilden, daß die oben beschriebenen Nachteile überwunden werden. Sie ist ferner auf eine Betätigungsvorrichtung der vorgenannten Art mit einem solchen Kettentrieb gerichtet.

Der erste Teil dieser Aufgabe wird erfindungsgemäß bei einem Kettentrieb der eingangs genannten Art dadurch gelöst, daß wenigstens ein Abschnitt der Kette mittels eines an den Laschen der Kettenglieder der Kette angreifenden Versteifungsteils mit einer Mehrzahl von hintereinander angeordneten Aussparungen zur Aufnahme der Laschen der Kettenglieder der Kette versteift ist, wobei die Kontur der Aussparungen im wesentlichen der Außenkontur der Laschen entspricht.

Die erfindungsgemäße Ausgestaltung verleiht dem Kettentrieb eine Kombination der Vorteile herkömmlicher Kettentriebe und Zahnstangentriebe, indem sich die maximal mögliche Traglast in dem von dem Versteifungsteil stabilisierten Abschnitt der Kette in Abhängigkeit der mechanischen Eigenschaften des Versteifungsteils, wie Steifigkeit, Biegefestigkeit etc., erheblich steigern läßt. Entsprechendes gilt für die Laufruhe des erfindungsgemäßen Kettentriebs. Der erfindungsgemäße Kettentrieb ist ferner insbesondere gegenüber Zahnstangentrieben erheblich kostengünstiger und gewährleistet aufgrund des Angriffs des Versteifungsteils nur an den Laschen der Kette unter Freilassung der diese verbindenden Niete den Einsatz eines Antriebs mit herkömmlichen, mit der Kette im Eingriff oder auch im Durchlauf stehenden Kraftübertragungsmitteln, insbesondere Ketten- oder Zahnrädern, an einer praktisch beliebigen Stelle des Kettentriebes. Zugleich verleiht das Versteifungsteil dem Kettentrieb eine der Steifigkeit von Zahnstangentrieben entsprechende Steifigkeit, so daß auch unter hoher Last und gleichfalls unter wechselnder Last keine oder nur vernachlässigbare Längenänderungen des erfindungsgemäßen Kettentriebs auftreten und somit eine exakte Positionsbestimmung eines mit dem Kettentrieb im Eingriff stehenden Kraftübertragungsmittels, wie eines Kettenrades, relativ zu dem Kettentrieb in Abhängigkeit der Umdrehungen des Kraftübertragungsmittels möglich ist. Dadurch, daß das Versteifungsteil mit einer Mehrzahl von Aussparungen ausgestattet ist, welche die Laschen der Kettenglieder der Kette aufnehmen und deren Kontur im wesentlichen der Außenkontur der Laschen entspricht, ergeben sich eine Vielzahl von Kraftübertragungsstellen zwischen der Kette und dem Versteifungsteil unter exakter Aufrechterhaltung der Relativposition der Kettenglieder untereinander unter Last. Die Verschleißempfindlichkeit des erfindungsgemäßen Kettentriebs ist im Vergleich mit Zahnstangentrieben äußerst gering und entspricht der von herkömmlichen Kettentrieben, wobei sich die Geometrie eines mit der Kette im Eingriff stehenden Kraftübertragungsmittels derart ausgestalten läßt, daß praktisch nur Rollreibung und keine oder nur geringfügig Gleitreibung infolge relativen Verschiebungen der Kettenglieder der Kette bezüglich des mit diesen im Eingriff stehenden Kraftübertragungsmittels auftritt. Im übrigen ist eine Anordnung des Versteifungsteils über den gesamten Verlauf der Kette oder auch nur eine abschnittsweise Anordnung des Versteifungsteils an der Kette des Kettentriebes denkbar, wobei im letztgenannten Fall erforderlichenfalls eine Umlenkung der Kette an einer oder mehreren Stellen möglich ist, so daß sich die Geometrie des Kettenverlaufes des Kettentriebes individuell verändern läßt.

Um eine optimale Stabilisierung der Kette zu erreichen, ist in bevorzugter Ausführung vorgesehen, daß das Versteifungsteil an jeweils entgegengesetzt angeordneten Laschen der Kettenglieder der Kette angreift. Auf diese Weise ist die Kette auf beiden Seiten von dem Versteifungsteil unterstützt, indem jeweils entgegengesetzte Laschen der Kettenglieder der Kette in entsprechenden Aussparungen des Versteifungsteils aufgenommen sind, und werden die auf die Kette wirkenden Zugkräfte unter Verhinderung von Längenänderungen derselben optimal in das Versteifungsteil eingeleitet.

Während das Versteifungsteil grundsätzlich sowohl an den Außen- als auch an den Innenlaschen der Kettenglieder oder auch nur an den Innenlaschen der Kettenglieder angreifen kann, ist in bevorzugter Ausführung vorgesehen, daß das Versteifungsteil nur an den Außenlaschen der Kettenglieder der Kette angreift, so daß die Innenlaschen und die die Laschen verbindenden Stege der Kettenglieder freigehalten werden, um für einen störungsfreien Eingriff von Kraftübertragungsmitteln und/oder Abgriffsmitteln, insbesondere Kettenrädern etc., über die gesamte Erstreckung der Kette zu sorgen. Ein Angriff des Versteifungsteils nur an den Außenlaschen der Kettenglieder ist ferner in konstruktiver Hinsicht günstig, da das Versteifungsteil dann von außen an den Außenlaschen der Kettenglieder der Kette festgelegt werden kann. Die in dem Versteifungsteil vorgesehenen Aussparungen nehmen in diesem Fall also lediglich die Außenlaschen der Kettenglieder auf, wobei die zu der Außenkontur der Laschen im wesentlichen komplementäre Kontur der Aussparungen einen praktisch spielfreien, verschleißarmen Betrieb bei hoher Laufruhe sicherstellt. Mit "komplementär" bzw. "einander entsprechender Kontur" im Sinne der Erfindung ist im übrigen gemeint, daß die jeweiligen Laschen der Kette zumindest in Lastrichtung weitgehend spielarm oder spielfrei in die Aussparungen des Versteifungsteils einbringbar sind, wobei die Kontur der Aussparungen gegebenenfalls auch derart ausgebildet sein kann, daß nicht nur genau eine, sondern auch zwei oder mehr, in Erstreckungsrichtung der Kette hintereinander angeordnete Laschen in einer Aussparung aufgenommen sind.

Vorzugsweise weist das Versteifungsteil an beiden mit den Laschen versehenen Enden der Niete der Kettenglieder der Kette je ein Profilteil mit den Aussparungen zur Aufnahme der Laschen der Kettenglieder auf, welche von wenigstens einem Distanzteil, dessen Breite im wesentlichen der Länge der Niete der Kette entspricht, miteinander verbunden sind.

Je nach Herstellungsweise des erfindungsgemäßen Kettentriebs kann das Profilteil einstückig oder auch zwei- oder mehrstückig und im letztgenannten Fall vorzugsweise im Bereich der Aussparungen zur Aufnahme der Laschen der Kettenglieder der Kette trennbar ausgebildet sein. Während die Herstellung des Kettentriebs im Falle eines einstückig ausgebildeten Profilteils auf einfache Weise dadurch erfolgen kann, daß die Profilteile an den entgegengesetzten Enden der Kette unter Eingriff insbesondere der Außenlaschen ihrer Kettenglieder in die Aussparungen der Profilteile und anschließendes Verbinden der Profilteile mittels der Distanzstücke geschehen kann, ist es bei einem im Bereich der Aussparungen zur Aufnahme der Laschen der Kettenglieder trennbar ausgebildeten Profilteil möglich, zunächst die mit den offen ausgebildeten Aussparungen versehenen Abschnitte der Profilteile über die Distanzteile miteinander zu verbinden, anschließend die Laschen der Kettenglieder der Kette in die offenen Aussparungen einzubringen und sodann die Aussparungen durch Montage des zweiten Teils des Profilteils derart zu verschließen, daß die Laschen fest in den nunmehr verschlossenen Aussparungen gehalten sind. Eine mehrteilige Ausbildung der Profilteile kann insbesondere im Falle eines mehrere, parallel angeordnete Ketten aufweisenden Kettentriebs aus Gründen einer einfachen Montage und insbesondere eines schnellen Zugriffs auf einzelne Kettenglieder im Falle einer Wartung von Vorteil sein.

Wie bereits angedeutet, kann der Kettentrieb nur eine oder auch zwei oder mehrere, parallel angeordnete Ketten umfassen, wobei im Falle eines mehrere Ketten aufweisenden Kettentriebs vorzugsweise je ein Profilteil an jeweils entgegengesetzt angeordneten Laschen einer jeden Kette angreift, um eine optimale, gleichmäßige Stabilisierung jeder Kette des Kettentriebs unter Verhinderung von Längenänderungen derselben unter Last bzw. Lastwechseln sicherzustellen.

Das Versteifungsteil kann vorteilhafterweise zumindest an einem Abschnitt der Kette angeordnet sein, welcher mit einem Kraftübertragungsmittel, wie einem Kettenrad oder dergleichen, im Eingriff steht, und der Kette insbesondere an solchen hochbelasteten Bereichen eine erhöhte Stabilität und Laufruhe zu verleihen. Selbstverständlich kann das Versteifungsteil auch, wie bereits erwähnt, über die gesamte Länge des Kettentriebes angeordnet sein, was insbesondere im Falle eines stationären Kettentriebes zweckmäßig ist, welcher z.B. als Führung eines entlang diesem hin- und herbewegbaren Bauelementes dient, welches über das Kraftübertragungsmittel mit dem Kettentrieb in Wirkverbindung steht.

Um insbesondere bei Kettentrieben, welche einer hohen Traglast ausgesetzt werden sollen, für eine gleichmäßigere Kraftübertragung und einen noch geringeren Verschleiß zu sorgen, sind in Weiterbildung zwei oder mehrere Kraftübertragungsmittel, insbesondere Kettenräder, vorgesehen, welche mit dem Kettentrieb im Eingriff stehen. Auf diese Weise wird der Andruck des jeweiligen Kraftübertragungsmittels aus die Kettenglieder der Kette bzw. Ketten des Kettentriebs verringert und werden somit die von diesem Andruck abhängigen Reibungskräfte - vornehmlich infolge Rollreibung - erniedrigt.

Eine solche Ausgestaltung bietet sich einerseits für Kettentriebe an, welche nur eine Kette umfassen, wobei dann vorzugsweise zwei oder mehrere mit der Kette im Eingriff stehende Kraftübertragungsmittel, insbesondere Kettenräder, in Erstreckungsrichtung der Kette hintereinander angeordnet sind.

Andererseits ist eine solche Ausgestaltung auch für Kettentriebe geeignet, welche zwei oder mehrere Ketten umfassen, wobei in diesem Fall bevorzugt jeweils wenigstens ein Kraftübertragungsmittel, insbesondere Kettenrad, mit einer jeden Kette im Eingriff steht und die Kraftübertragungsmittel zweckmäßig parallel angeordnet sind, z.B. auf einer gemeinsamen Achse sitzen. Selbstverständlich können erforderlichenfalls auch zwei oder mehrere solcher Einheiten von parallel angeordneten Kraftübertragungsmitteln, wie Kettenräder, in Erstreckungsrichtung der Kette hintereinander angeordnet sein mit der Mehrzahl von Ketten des Kettentriebs im Eingriff stehen.

Um im Falle von zwei oder mehreren Kraftübertragungsmitteln für eine gleichmäßige Kraftverteilung zu sorgen, ist in bevorzugter Ausführung vorgesehen, daß die Kraftübertragungsmittel, insbesondere Kettenräder, synchronisiert sind. Dies kann einerseits mechanisch, z.B. mittels eines Getriebes (bei hintereinander angeordneten Kraftübertragungsmitteln) oder mittels einer den Kraftübertragungsmitteln gemeinsamen Achse (bei parallel angeordneten Kraftübertragungsmitteln), andererseits elektronisch, elektromagnetisch oder auf beliebige andere Weise geschehen. So ist es beispielsweise insbesondere bei zwei oder mehreren, hintereinander angeordneten Kraftübertragungsmitteln aus Kostengründen günstig, wenn einem jeden Kraftübertragungsmittel ein separater Antrieb zugeordnet ist und die Antriebe synchronisiert sind, was z.B. mittels einer geeigneten Antriebssteuerung der Kraftübertragungsmittel erreicht werden kann, welche mit Sensoren zur Erfassung des aktuellen Drehmomentes der Kraftübertragungsmittel zusammenwirkt und die Kraftübertragungsmittel derart antreibt, daß sämtliche Kraftübertragungsmittel ein etwa entsprechendes Drehmoment aufweisen.

Wie bereits angedeutet, sind die Kraftübertragungsmittel vorzugsweise von Kettenrädern gebildet sind, wobei insbesondere wenigstens zwei Kettenräder unter einer Relativdrehung zueinander, welche etwa dem Bogenmaß der halben Länge eines Zahns der Kettenräder in Umfangsrichtung derselben entspricht, mit der Kette im Eingriff stehen. Durch einen solchen Drehversatz der Kettenräder ist eine besonders gleichmäßige und laufruhige Kraftübertragung zwischen dem Kettentrieb und den Kettenrädern während des Betriebs sichergestellt.

Das Versteifungsteil weist für die meisten Anwendungsfälle in der Regel eine lineare Erstreckungsrichtung auf, wobei es erforderlichenfalls selbstverständlich auch kreis-, ellipsensegmentförmig oder andersartig ausgebildet sein kann.

Die Erfindung betrifft ferner eine Betätigungsvorrichtung zum Antrieb von hin- und herbewegbaren Bauelementen, wie Plattformen, Hebebühnen, Hubleitern, Laufkatzen, Kranen, Toren oder dergleichen, welche mit einem Kettentrieb der vorgenannten Art ausgestattet ist.

Nachstehend ist die Erfindung anhand von Ausführungsbeispielen unter Bezugnahme auf die Zeichnungen näher erläutert. Dabei zeigen:
- Fig. 1: eine perspektivische Ansicht einer ersten Ausführungsform eines Kettentriebes mit einer Kette;
- Fig. 2: eine Seitenansicht eines Versteifungsteils des Kettentriebs gemäß Fig. 1;
- Fig. 3: eine Detailansicht III des Versteifungsteils gemäß Fig. 2;
- Fig. 4: eine Stirnansicht IV des Kettentriebs gemäß Fig. 1;
- Fig. 5: eine perspektivische Ansicht des Kettentriebs gemäß Fig. 1 bis 4 mit zwei hintereinander angeordneten Kraftübertragungsmitteln;
- Fig. 6: eine Schnittansicht VI-VI des Kettentriebs gemäß Fig. 5;
- Fig. 7: eine Stirnsicht VII des Kettentriebs gemäß Fig. 5 im Bereich der Kraftübertragungsmittel;
- Fig. 8: einen Detailschnitt VIII-VIII des Kettentriebs gemäß Fig. 7 im Bereich der Kraftübertragungsmittel;
- Fig. 9: eine perspektivische Darstellung einer zweiten Ausführungsform eines Kettentriebs mit zwei parallel verlaufenden Ketten mit parallel angeordneten Kraftübertragungsmitteln;
- Fig. 10: eine Schnittansicht X-X des Kettentriebs gemäß Fig. 9;
- Fig. 11: eine Detailansicht XI des Kettentriebs gemäß Fig. 10; und
- Fig. 12: eine Stirnansicht XII des Kettentriebs gemäß Fig. 9.

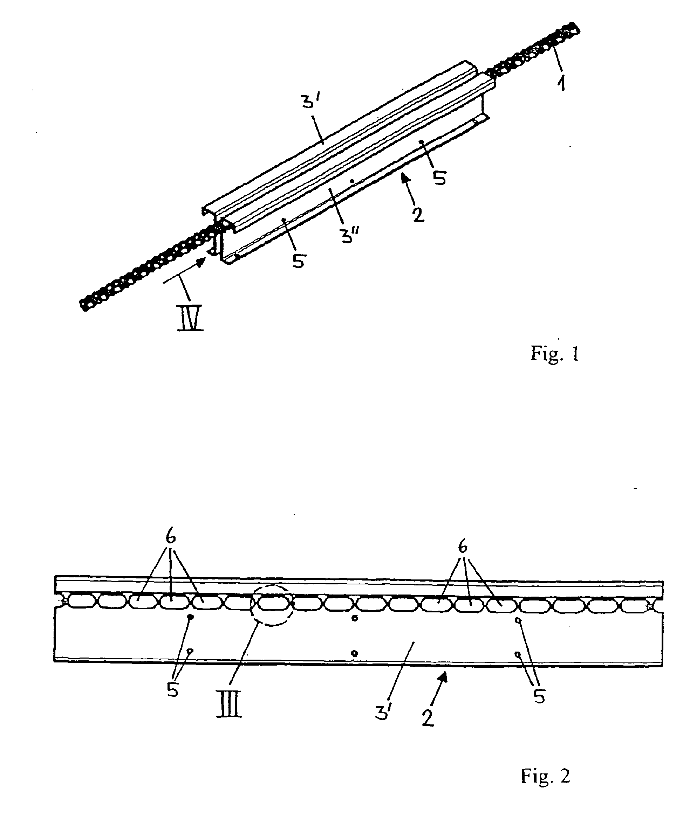

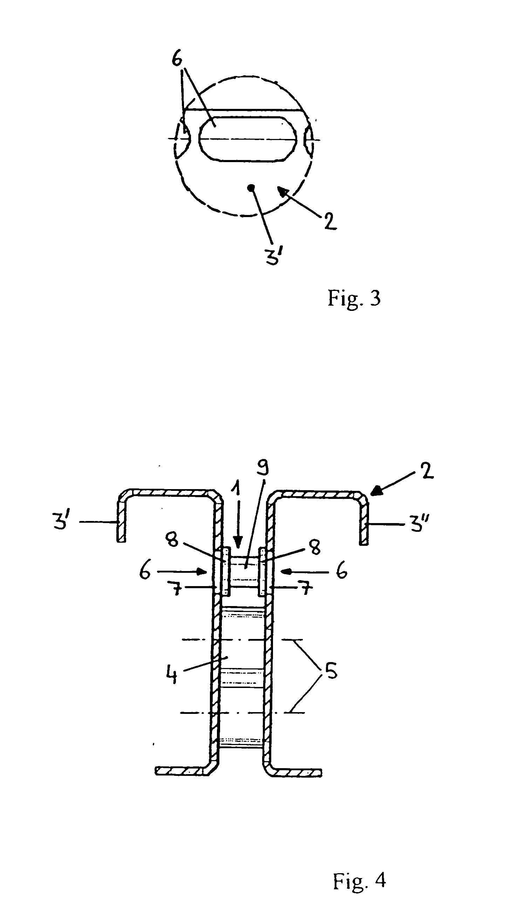

Der in Fig. 1 dargestellte Kettentrieb weist eine herkömmliche Kette 1 auf, welche von einer Vielzahl von in Fig. 1 nicht im einzelnen wiedergegebenen Kettengliedern gebildet ist, die durch Niete verbundene Außen- und Innenlaschen umfassen, welche an den Enden einer jeden Niet angelenkt sind und jeweils zwei benachbarte Niete miteinander verbinden (vgl. Fig. 4). Der mittlere Abschnitt der Kette 1 ist mittels eines Versteifungsteils 2 stabilisiert, welches beim vorliegenden Ausführungsbeispiel aus zwei Profilteilen 3', 3'' besteht, welche über Distanzteile 4 (Fig. 4), z.B. mittels Schrauben 5 oder dergleichen, lösbar miteinander verbunden sind. Die beiden Profilteile 3', 3'' sind in Form von bezüglich der Kette nach außen gerichteten C-Profilen ausgestaltet und verleihen dem Versteifungsteil 2 eine hohe Biege- und Torsionssteifigkeit.

Wie aus Fig. 2 ersichtlich, ist das Profilteil 3' einstükkig ausgebildet und weist eine Mehrzahl von in Längserstreckungsrichtung hintereinander angeordneten Aussparungen 6 zur Aufnahme der Laschen der Kettenglieder der Kette 1 auf, deren Kontur im wesentlichen der Außenkontur der Laschen entspricht und deren Abstand entsprechend dem Abstand der Laschen der Kettenglieder gewählt ist, so daß die Laschen im montierten Zustand des Kettentriebes ohne nennenswertes Spiel in den Aussparungen 6 aufgenommen sind. Folglich nimmt beim vorliegenden Ausführungsbeispiel jede Aussparung 6 genau eine Lasche der Kettenglieder der Kette 1 auf. Eine Detailansicht des Profilteils 3' im Bereich der Aussparungen 6 ist in Fig. 3 wiedergegeben. Das Profilteil 3'' ist entsprechend dem Profilteil 3' aufgebaut.

Wie der Fig. 4 zu entnehmen ist, greift jedes Profilteil 3', 3'' ausschließlich an den Außenlaschen 7 der Kette 1 an, wobei die Außenkontur der Außenlaschen 7 bezüglich der Innenkontur der Aussparungen 6 komplementär ausgebildet ist, so daß die Außenlaschen 7 der Kettenglieder der Kette 1 im wesentlichen spielfrei in den Aussparungen 6 gehalten sind, um für eine gleichmäßige Abstützung der Kette 1 zu sorgen. Die Innenlaschen 8 der Kettenglieder der Kette 1 befinden sich ebenso wie deren Niete 9 außer Eingriff mit den Profilteilen 3', 3'' des Versteifungsteils 2, so daß über den gesamten, von dem Versteifungsteil 2 stabilisierten Abschnitt der Kette 1 ein ungehinderter Eingriff eines Kraftübertragungsmittels (in Fig. 1 bis 4 nicht dargestellt) in die Kette 1 möglich ist. Die parallele Anordnung der beiden Profilteile 3', 3'' an beiden, an den Enden einer jeden Niet 9 der Kette 1 um die Längsachse der Niet 9 schwenkbar angeordneten Außenlaschen 7 sorgt für einen Angriff des Versteifungsteils 2 an jeweils entgegengesetzt angeordneten Außenlaschen 7, um die Kette 1 unter Vermeidung von Längenänderung unter Lasteinwirkung optimal beidseitig, d.h. an beiden Enden der Niete 9, zu stabilisieren.

Der Durchmesser der Innenlaschen 8 übertrifft beim gezeigten Ausführungsbeispiel den Durchmesser der Außenlaschen 7, was insofern von Vorteil ist, als die Kette 1 unter Vermeidung des Einsatzes zusätzlicher Haltemittel sowohl axial als auch radial bezüglich der Niete 9 festgelegt ist. Die beiden C-förmigen Profilteile 3', 3'' sind über die Distanzstücke 4 mittels Schrauben 5 lösbar miteinander verbunden, wobei die Breite der Distanzteile 5 etwa der Länge der Niete 9, insbesondere dem Abstand der Außenlaschen 7 der Kette 1, entspricht.

Die Herstellung des Kettentriebes gemäß Fig. 1 bis 4 kann auf einfache Weise dadurch geschehen, indem je ein Profilteil 3', 3'' an den mit den Laschen 7, 8 versehenen Enden der Niete 9 der Kettenglieder der Kette 1 angeordnet wird und die Außenlaschen 7 der Kettenglieder in die Aussparungen 6 (siehe auch Fig. 2) des jeweiligen Profilteils 3', 3'' eingeführt werden. Hernach werden die Profilteile 3', 3'' über die Distanzteile 4 aneinander festgelegt. Auf diese Weise ist der Kettentrieb an dem mit dem Versteifungsteil 2 versehenen Abschnitt der Kette 1 auf einfache und kostengünstige Weise stabilisiert und verleiht das Versteifungsteil 2 dem Kettentrieb zusätzlich eine hohe Laufruhe unter Verhinderung von Längenänderungen der Kette 1 unter Last bzw. unter Lastwechseln.

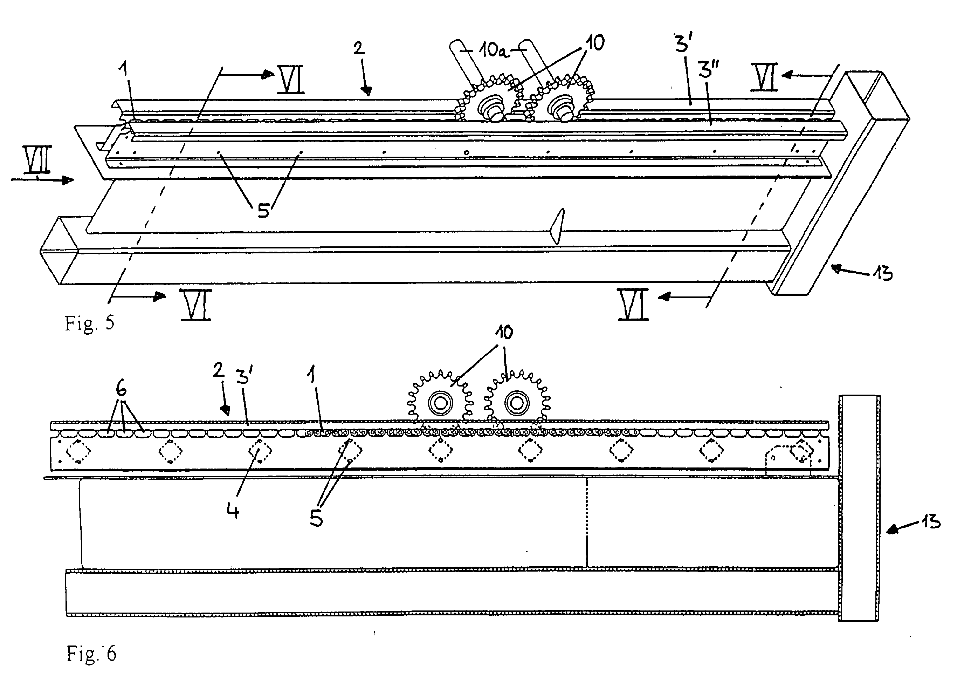

In Fig. 5 ist der Kettentrieb gemäß Fig. 1 bis 4 dargestellt, welcher an einem Halteglied 13 festgelegt ist, welches beim vorliegenden Ausführungsbeispiel von Vierkantprofilen gebildet ist. Der beispielsweise stationär angeordnete Kettentrieb dient zur Führung eines beliebigen, entlang des Kettentriebs hin- und herbewegbaren Bauelementes (nicht gezeigt), welches Kraftübertragungsmittel 10 in Form von Zahn- oder Kettenrädern aufweist, welche mit der Kette 1 im Eingriff stehen und mittels eines Antriebs (ebenfalls nicht gezeigt), z.B. in Form von Elektromotoren, antreibbar sind. Die Kette 1 des Kettentriebs ist im vorliegenden Fall über ihre gesamte Länge auf die oben erläuterte Weise von dem Versteifungsteil 2 versteift.

Um für eine möglichst verschleißarme Kraftübertragung zwischen dem Kettentrieb und dem Kraftübertragungsmittel unter verringertem Andruck des unter Last stehenden Kraftübertragungsmittels auf die einzelnen Kettenglieder während des Betriebs zu sorgen, sind mehrere - im vorliegenden Fall zwei - in Erstreckungsrichtung der Kette 1 hintereinander angeordnete Kettenräder 10 vorgesehen. Dabei sind die Kettenräder 10 vorzugsweise synchronisiert, um eine gleichmäßige Kraftübertragung an beiden Kettenrädern 10 sicherzustellen. Dies kann beispielsweise dadurch gewährleistet sein, indem jedem Kettenrad 10 ein separater Antrieb zugeordnet ist und eine Steuerung der Antriebe (nicht dargestellt) derart mit einer Einrichtung zur Erfassung des an den Kettenrädern 10 bzw. an deren Achsen 10a wirkenden, aktuellen Drehmomentes, wie eines Drehmomentsensors (ebenfalls nicht dargestellt), zusammenwirkt, daß beide Kettenräder 10 durch ihren jeweiligen Antrieb mit im wesentlichen demselben Drehmoment beaufschlagt werden.

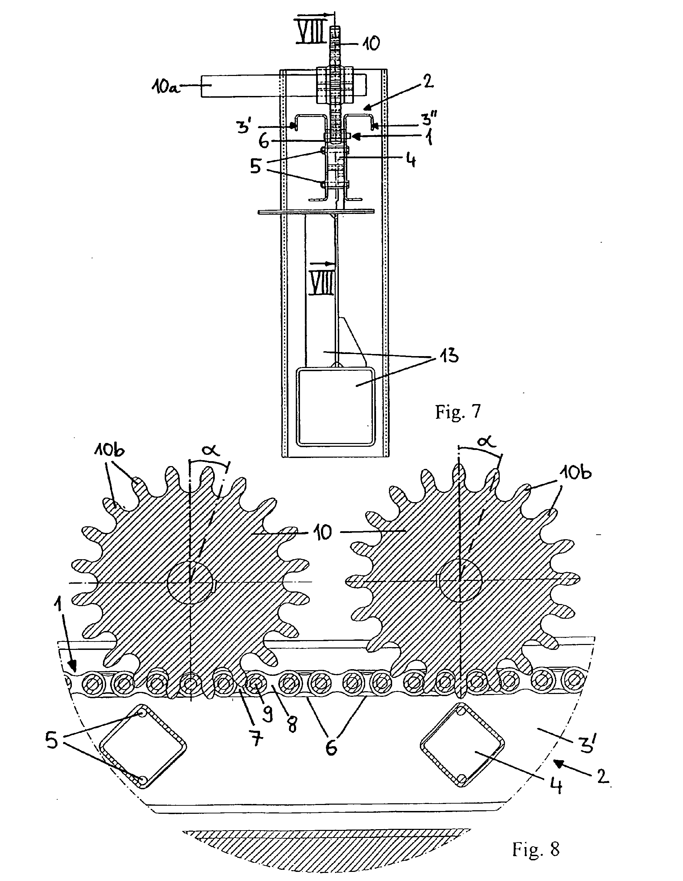

In Fig. 6 ist der Kettentrieb mit den mit diesem im Eingriff stehenden Kettenrädern 10 nochmals entlang der Schnittebene VI-VI der Fig. 5 dargestellt. In Fig. 7 ist eine Stirnansicht des Kettentriebs in Richtung des Pfeils VII der Fig. 5 zur Veranschaulichung des Eingriffs der Kettenräder 10 in die Kette 1 wiedergegeben.

Wie insbesondere aus Fig. 8 ersichtlich, stehen die beiden von Kettenrädern gebildeten Kraftübertragungsmittel 10 des Kettentriebs unter einer Relativdrehung α/2 zueinander mit der Kette 1 im Eingriff, welche der Hälfte des Bogenmaßes α der Länge eines Zahns 10b der Kettenräder 10 in Umfangsrichtung derselben entspricht. Dabei weisen die Kettenräder 10 eine einander entsprechende Zahnung auf. Auf diese Weise ist eine äußerst gleichmäßige und laufruhige Kraftübertragung zwischen der Kette 1 des Kettentriebs und den Kettenrädern 10 während des Betriebs sichergestellt, wobei stets zumindest ein Zahn 10b eines der beiden Kettenräder 10 im wesentlichen senkrecht mit der Kette 1 im Eingriff steht.

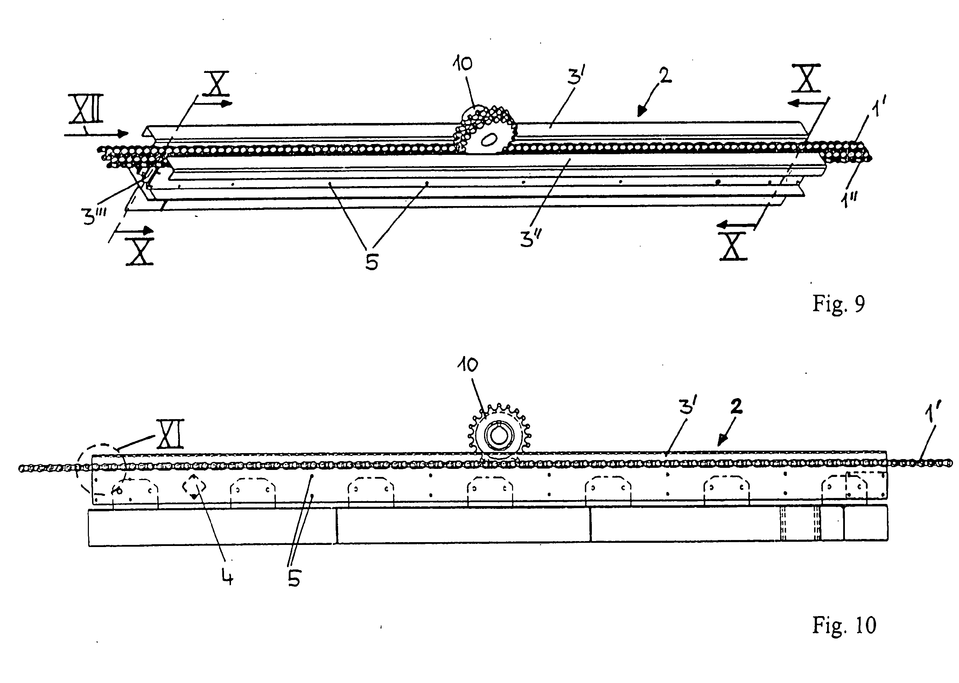

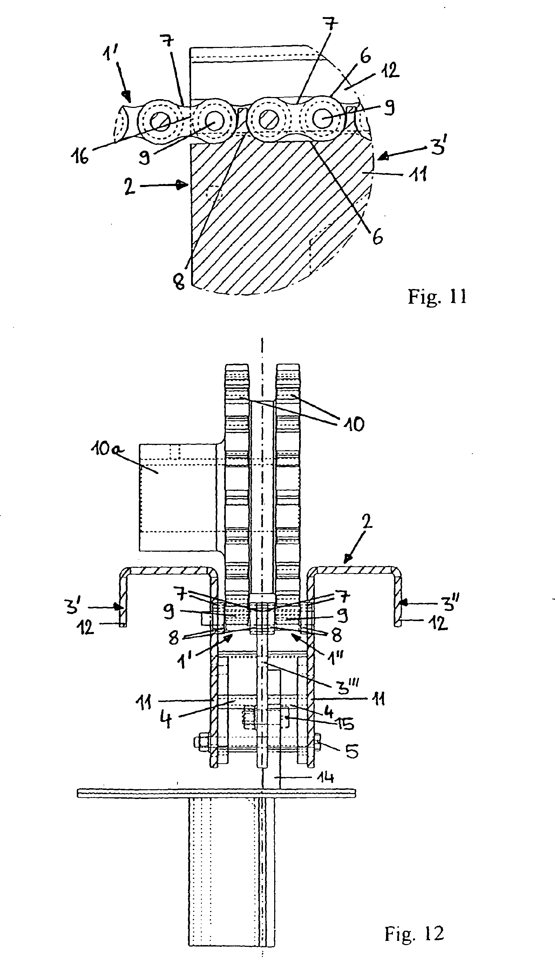

In Fig. 9 ist eine andere Ausführungsform eines Kettentriebes wiedergegeben, welche sich von dem Kettentrieb gemäß Fig. 1 bis 8 insbesondere dadurch unterscheidet, daß der Kettentrieb zwei parallel angeordnete Ketten 1', 1'' umfaßt. Beide Ketten 1', 1" sind wiederum auf herkömmliche Weise von mehreren Kettengliedern gebildet, welche durch Niete 9 verbundene Außen- 7 und Innenlaschen 8 aufweisen, wobei die Außenlaschen 7 an den endseitig einer jeden Niet 9 angeordneten und jeweils zwei benachbarte Niete 9 miteinander verbindenden Innenlaschen 7 angelenkt sind (Fig. 11 und 12). Die beim vorliegenden Ausführungsbeispiel von identischen Kettengliedern gebildeten Ketten 1', 1" sind derart angeordnet, daß die Niete 9 der Kettenglieder beider Ketten 1', 1'' jeweils in Flucht bzw. die einander zugekehrten Außenlaschen 7 der Kettenglieder der Ketten 1', 1'' deckungsgleich angeordnet sind.

Das Versteifungsteil 2 greift wiederum nur an jeweils entgegengesetzt angeordneten Außenlaschen 7 der Kettenglieder beider Ketten 1', 1'' an, wie nachstehend unter Bezugnahme auf Fig. 11 und 12 näher erläutert ist. Jeder Kette 1', 1'' des Kettentriebs ist wiederum ein Kraftübertragungsmittel 10 in Form eines Kettenrades zugeordnet, wobei jedes Kettenrad 10 mit jeweils einer der beiden Ketten 1', 1'' im Eingriff steht. Um für eine gleichmäßige Kraftübertragung zu sorgen, sind die Kettenräder 10 - in diesem Fall mechanisch - synchronisiert, indem sie drehfest auf einer gemeinsamen Achse 10a sitzen. Aufgrund der Freilassung der Innenlaschen 8 und der Niete 9 der Kettenglieder der Ketten 1', 1" durch das Versteifungsteil 2 ist ein störungsfreier Eingriff des Kraftübertragungsmittels 10 in die Ketten 1', 1'' sichergestellt. In Fig. 10 ist ein Längsschnitt durch den Kettentrieb gemäß Fig. 9 entlang der Schnittebene X-X der Fig. 9 dargestellt.

Wie insbesondere aus Fig. 11 und 12 ersichtlich, umfaßt das Versteifungsteil 2 drei Profilteile 3', 3'', 3''' mit einer Mehrzahl von hintereinander angeordneten Aussparungen 6 zur Aufnahme der Außenlaschen 7 der Kettenglieder der Ketten 1', 1''. Während die Profilteile 3', 3'' an den einander abgekehrten Außenlaschen 7 der beiden parallelen Ketten 1', 1" angeordnet und in Form je eines bezüglich der Ketten 1', 1" nach außen offenen C-Profils ausgebildet sind, ist das Profilteil 3''' zwischen den Profilteilen 3', 3'' angeordnet. Die Aussparungen 6 der Profilteile 3', 3'' nehmen die einander abgekehrten Außenlaschen 7 der Kettenglieder der beiden Ketten 1', 1" auf, während in den Aussparungen 6 des Profilteils 3''' die einander zugekehrten Außenlaschen 7 der Kettenglieder der Ketten 1', 1" aufgenommen sind (Fig. 12). Die Profilteile 3' ,3'', 3''' sind über Distanzteile 4, z.B. mittels Schrauben 5, lösbar miteinander verbunden.

Wie der Fig. 11 zu entnehmen ist, sind zumindest die an den einander abgekehrten Außenlaschen 7 der Kettenglieder der Ketten 1', 1" angeordneten Profilteile 3', 3'' zweistückig ausgebildet und im Bereich der Aussparungen 6, welche die Außenlaschen 7 der Ketten 1', 1" aufnehmen, trennbar ausgebildet. Die Aussparungen 6 der Profilteile 3', 3'', deren Innenkontur im montierten Zustand wiederum der Außenkontor der Außenlaschen 7 der Kettenglieder der Ketten 1', 1'' entspricht, sind von den einander zugewandten Seiten je eines Unterteils 11 und eines Oberteils 12 der Profilteile 3', 3'' gebildet, so daß die Außenlaschen 7 der Kettenglieder der Ketten 1', 1" der Profilteile 3', 3'' im wesentlichen spielfrei in den Aussparungen 6 aufgenommen sind.

Bei dem gezeigten Ausführungsbeispiel sind die Aussparungen 6 im Unterteil 11 der Profilteile 3', 3'' nach oben in Richtung des Oberteils 12 offen ausgebildet und durch Befestigung des Oberteils 12 an dem Unterteil 11 verschließbar. Wie in Fig. 11 durch Strichlinierung 16 angedeutet, übergreift dabei das Oberteil 12 der Profilteile 3', 3'' die einander abgekehrten Außenlaschen 7 der parallel angeordneten Ketten 1', 1", so daß die Ketten 1', 1" bezüglich der Niete 9 axialfest gehalten sind. Das zwischen den Profilteilen 3', 3'' angeordnete Profilteil 3''' (Fig. 12) kann ebenfalls zweiteilig oder auch einteilig ausgebildet sein, wobei die Aussparungen des Profilteils 3''' in jedem Fall mit den Aussparungen der Profilteile 3', 3'' fluchtend angeordnet sind. Wie aus Fig. 12 ersichtlich, ist an dem Versteifungsteil 2 ferner ein Halteglied 13, beispielsweise über einen mittels Schrauben 15 an dem Profilteil 3''' festgelegten Träger 14, lösbar befestigt.

Das Versteifungsteil 2 weist sowohl bei dem in Fig. 1 bis 8 dargestellten Kettentrieb als auch bei dem Kettentrieb gemäß Fig. 9 bis 12 eine lineare Erstreckungsrichtung auf, um die Kette 1 bzw. die Ketten 1', 1'' entlang einem geradlinigen Abschnitt zu stabilisieren.

Die Herstellung des Kettentriebes gemäß Fig. 9 bis 12 erfolgt auf einfache Weise dadurch, indem die Ketten 1', 1'' parallel angeordnet und die einander zugekehrten Außenlaschen 7 der Kettenglieder der Ketten 1', 1'' in die Aussparungen 6 des zwischen den parallelen Ketten 1', 1'' angeordneten, mittleren Profilteils 3''' eingebracht werden. Sodann werden die Unterteile 11 der äußeren Profilteile 3', 3'' über die Distanzteile 4 derart an dem Profilteil 3''' festgelegt, daß die einander abgekehrten Außenlaschen 7 der Kettenglieder der Ketten 1', 1'' in den nach oben offenen Aussparungen 6 (Fig. 11) aufgenommen sind. Schließlich werden die Oberteile 12 der Profilteile 3', 3'' an deren Unterteilen 11 festgelegt, wobei aufgrund des außenseitigen Übergriffs der Oberteile 12 über die einander abgekehrten Außenlaschen 7 der Ketten 1', 1'' (Strichlinie 16 der Fig. 11) eine axiale Verschiebung der Ketten 1', 1" in Längsrichtung der Niete 9 verhindert wird.

Die gezeigten Kettentriebe sind insbesondere zum Einsatz in Betätigungsvorrichtungen zum Antrieb von hin- und her bewegbaren Bauelementen, wie stationären oder auf einem fahrbaren Chassis angeordneten Hebebühnen, Hubleitern, Laufkatzen, Kranen oder dergleichen, sowie von Gebäudeelementen, wie Plattformen, Türen oder Toren, insbesondere von Parkhäusern, Garagen, Industrieanlagen etc., geeignet, wobei sie infolge der Versteifung der Kette 1 bzw. der Ketten 1', 1" insbesondere für eine erhöhte Traglast und eine verbesserte Laufruhe des Kettentriebes bei geringem Verschleiß sorgen. Ferner erfährt die Kette 1 bzw. erfahren die Ketten 1', 1" durch die erfindungsgemäße Aussteifung auch bei großen Lastwechseln praktisch keine Längenänderungen, so daß eine exakte Positionsbestimmung des über die Kraftübertragungsmittel 10 angetriebenen Bauelementes in Abhängigkeit der Umdrehungszahl der Kettenräder 10 möglich ist.

## Patentansprüche

1. Kettentrieb mit wenigstens einer Kette (1, 1', 1'') mit einer Mehrzahl von Kettengliedern, welche durch Niete (9) verbundene Außen- (7) und Innenlaschen (8) aufweisen, wobei wenigstens ein Abschnitt der Kette (1, 1', 1'') mittels eines an den Laschen (7, 8) der Kettenglieder der Kette (1, 1', 1") angreifenden Versteifungsteils (2) (versteift ist) **dadurch gekennzeichnet, daß** das Versteifungsteil (2) mit einer Mehrzahl von hintereinander angeordneten Aussparungen (6) zur Aufnahme der Laschen (7, 8) der Kettenglieder der Kette (1, 1', 1'') versehen ist, wobei die Kontur der Aussparungen (6) im wesentlichen der Außenkontur der Laschen (7, 8) entspricht.

2. Kettentrieb nach Anspruch 1, **dadurch gekennzeichnet, daß** das Versteifungsteil (2) an jeweils entgegengesetzt angeordneten Laschen (7, 8) der Kettenglieder der Kette (1, 1', 1") angreift.

3. Kettentrieb nach Anspruch 1 oder 2, **dadurch gekennzeichnet, daß** das Versteifungsteil (2) nur an den Au-ßenlaschen (7) der Kettenglieder der Kette (1, 1', 1'') angreift.

4. Kettentrieb nach einem der Ansprüche 1 bis 3, **dadurch gekennzeichnet, daß** das Versteifungsteil (2) an beiden mit den Laschen (7, 8) versehenen Enden der Niete (9) der Kettenglieder der Kette (1, 1', 1'') je ein Profilteil (3', 3'', 3''') mit den Aussparungen (6) zur Aufnahme der Laschen (7, 8) der Kettenglieder aufweist, welche von wenigstens einem Distanzteil (4), dessen Breite im wesentlichen der Länge der Niete (9) der Kette (1, 1', 1'') entspricht, miteinander verbunden sind.

5. Kettentrieb nach Anspruch 4, **dadurch gekennzeichnet, daß** das Profilteil (3', 3'', 3''') einstückig ausgebildet ist.

6. Kettentrieb nach einem der Ansprüche 4 oder 5, **dadurch gekennzeichnet, daß** das Profilteil (3', 3'', 3''') zwei- oder mehrstückig und im Bereich der Aussparungen (6) zur Aufnahme der Laschen (7, 8) der Kettenglieder der Kette (1, 1', 1'') trennbar ausgebildet ist.

7. Kettentrieb nach einem der Ansprüche 1 bis 6, **dadurch gekennzeichnet, daß** der Kettentrieb nur eine Kette (1) umfaßt.

8. Kettentrieb nach einem der Ansprüche 1 bis 6, **dadurch gekennzeichnet, daß** der Kettentrieb zwei oder mehrere, parallel angeordnete Ketten (1', 1'') umfaßt.

9. Kettentrieb nach einem des Ansprüche 4 oder 5 und nach Anspruch 8, **dadurch gekennzeichnet, daß** je ein Profilteil (3', 3'', 3''') an jeweils entgegengesetzt angeordneten Laschen (7, 8) einer jeden Kette (1, 1', 1'') angreift.

10. Kettentrieb nach einem der Ansprüche 1 bis 9, **dadurch gekennzeichnet, daß** das Versteifungsteil (2) zumindest an einem Abschnitt der Kette (1, 1', 1'') angeordnet ist, welcher mit wenigstens einem Kraftübertragungsmittel (10), wie einem Kettenrad oder dergleichen, im Eingriff steht.

11. Kettentrieb nach Anspruch 10, **dadurch gekennzeichnet, daß** zwei oder mehrere Kraftübertragungsmittel (10), insbesondere Kettenräder, vorgesehen sind.

12. Kettentrieb nach Anspruch 11, **dadurch gekennzeichnet, daß** der Kettentrieb nur eine Kette (1) umfaßt und zwei oder mehrere mit der Kette (1) im Eingriff stehende Kraftübertragungsmittel (10), insbesondere Kettenräder, hintereinander angeordnet sind.

13. Kettentrieb nach Anspruch 11, **dadurch gekennzeichnet, daß** der Kettentrieb zwei oder mehrere Ketten (1', 1'') umfaßt und jeweils wenigstens ein Kraftübertragungsmittel (10), insbesondere Kettenrad, mit einer jeden Kette (1', 1'') im Eingriff steht, wobei die Kraftübertragungsmittel (10) parallel angeordnet sind.

14. Kettentrieb nach einem der Ansprüche 11 bis 13, **dadurch gekennzeichnet, daß** die Kraftübertragungsmittel (10), insbesondere Kettenräder, synchronisiert sind.

15. Kettentrieb nach Anspruch 14, **dadurch gekennzeichnet, daß** einem jeden Kraftübertragungsmittel (10) ein separater Antrieb zugeordnet ist und die Antriebe synchronisiert sind.

16. Kettentrieb nach einem der Ansprüche 11 bis 15, **dadurch gekennzeichnet, daß** die Kraftübertragungsmittel (10) von Kettenrädern gebildet sind, wobei wenigstens zwei Kettenräder unter einer Relativdrehung (α/2) zueinander, welche etwa dem Bogenmaß der halben Länge eines Zahns der Kettenräder in Umfangsrichtung derselben entspricht, mit der Kette (1, 1', 1'') im Eingriff stehen.

17. Kettentrieb nach einem der Ansprüche 1 bis 16, **dadurch gekennzeichnet, daß** das Versteifungsteil (2) eine etwa lineare Erstreckungsrichtung aufweist.

18. Betätigungsvorrichtung zum Antrieb von hin- und herbewegbaren Bauelementen, wie Plattformen, Hebebühnen, Hubleitern, Laufkatzen, Kranen, Toren oder dergleichen, **gekennzeichnet durch** wenigstens einen Kettentrieb nach einem der Ansprüche 1 bis 17.

## Claims

1. Chain drive with at least one chain (1, 1', 1") with a plurality of chain links, which have outer sideplates (7) and inner sideplates (8) linked by rivets (9), in which at least one portion of the chain (1, 1', 1") is stiffened by means of a stiffening part (2) acting on the sideplates (7, 8) of the links of the chain (1, 1', 1"), **characterized in that** the stiffening part (2) is provided with a plurality of successively arranged recesses (6) for receiving the sideplates (7, 8) of the links of chain (1, 1', 1"), the contour of the recesses (6) essentially corresponding to the outer contour of the sideplates (7, 8).

2. Chain drive according to claim 1, **characterized in that** the stiffening part (2) acts on in each case oppositely arranged sideplates (7, 8) of the links of chain (1, 1', 1").

3. Chain drive according to claim 1 or 2, **characterized in that** the stiffening part (2) only acts on the outer sideplate (7) of the links of chain (1, 1', 1").

4. Chain drive according to one of the claims 1 to 3, **characterized in that** the stiffening part (2) has on both ends of the ends of the rivets (9) of the links of chain (1, 1' 1") provided with the sideplates (7, 8) a profile part (3', 3", 3"') with the recesses (6) for receiving the sideplates (7, 8) of the chain links and which are interconnected by at least one spacer part (4), whose width essentially corresponds to the length of the rivets (9) of the chain (1, 1', 1") .

5. Chain drive according to claim 4, **characterized in that** the profile part (3', 3", 3"') is constructed in one piece.

6. Chain drive according to one of the claims 4 or 5, **characterized in that** the profile part (3', 3", 3"') is in two or more pieces and is constructed in separable manner in the vicinity of the recesses (6) for receiving the sideplates (7, 8) of the links of chain (1, 1', 1").

7. Chain drive according to one of the claims 1 to 6, **characterized in that** the chain drive comprises a single chain (1).

8. Chain drive according to one of the claims 1 to 6, **characterized in that** the chain drive comprises two or more parallel chains (1', 1").

9. Chain drive according to one of the claims 4 or 5 and claim 8, **characterized in that** in each case one profile part (3', 3", 3"') acts on in each case oppositely positioned sideplates (7, 8) of each chain (1, 1', 1").

10. Chain drive according to one of the claims 1 to 9, **characterized in that** the stiffening part (2) is located on at least one portion of the chain (1, 1', 1") which is in engagement with at least one power transmission means (10), such as a sprocket or the like.

11. Chain drive according to claim 10, **characterized in that** there are two or more power transmission means (10), particularly sprockets.

12. Chain drive according to claim 11, **characterized in that** the chain drive comprises a single chain (1) and there are two or more power transmission means (10), particularly sprockets, arranged in successive manner and in engagement with the chain (1).

13. Chain drive according to claim 11, **characterized in that** the chain drive comprises two or more chains (1', 1") and in each case at least one power transmission means (10), particularly sprocket, is in engagement with each chain (1', 1"), the power transmission means (10) being arranged in parallel.

14. Chain drive according to one of the claims 11 to 13, **characterized in that** the power transmission means (10), particularly sprockets, are synchronized.

15. Chain drive according to claim 14, **characterized in that** with each power transmission means (10) is associated a separate drive and the drives are synchronized.

16. Chain drive according to one of the claims 11 to 15, **characterized in that** the power transmission means (10) are formed by sprockets and at least two sprockets are in engagement with the chain (1, 1', 1") under a relative mutual rotation (α/2) roughly corresponding to the arc measure of half the length of a tooth of the sprockets in the circumferential direction thereof.

17. Chain drive according to one of the claims 1 to 16, **characterized in that** the stiffening part (2) has a roughly linear extension direction.

18. Operating device for driving reciprocatable components, such as platforms, elevating platforms, lifting ladders, travelling winches, cranes, gates etc., **characterized by** at least one chain drive according to one of the claims 1 to 17.

## Revendications

1. Entraînement à chaîne comprenant au moins une chaîne (1,1', 1") avec une pluralité de maillons de chaîne, qui présentent des éclisses extérieures (7) et intérieures (8) reliées par des axes (9), une partie au moins de la chaîne (1, 1', 1") étant rigidifiée au moyen d'un élément de renforcement (2) en prise avec les éclisses (7,8) des maillons de la chaîne (1, 1', 1"), **caractérisé en ce que** l'élément de renforcement (2) présente une pluralité d'évidements (6) disposés les uns derrière les autres pour recevoir les éclisses (7,8) des maillons de la chaîne (1, 1', 1"), le profil des évidements (6) correspondant sensiblement au profil extérieur des éclisses (7,8).

2. Entraînement à chaîne selon la revendication 1, **caractérisé en ce que** l'élément de renforcement (2) maintient à chaque fois deux éclisses (7,8) des maillons de la chaîne (1, 1', 1") disposées opposées l'une à autres.

3. Entraînement à chaîne selon la revendication 1 ou 2, **caractérisé en ce que** l'élément de renforcement (2) ne coopère qu'avec les éclisses extérieures (7) des maillons de la chaîne (1, 1', 1").

4. Entraînement à chaîne selon l'une quelconque des revendications 1 à 3, **caractérisé en ce que** l'élément de renforcement (2) présente à chacune des deux extrémités de l'axe (9) portant les éclisses (7,8) des maillons de la chaîne (1, 1', 1") un élément profilé (3', 3", 3"') présentant les évidements (6) pour recevoir les éclisses (7,8) des maillons de chaîne, éléments profilés reliés entre eux par au moins une entretoise (4), dont la largeur correspond sensiblement à la longueur de l'axe (9) de la chaîne (1, 1', 1").

5. Entraînement à chaîne selon la revendication 4, **caractérisé en ce que** l'élément profilé (3', 3", 3"') est conformé d'une seule pièce.

6. Entraînement à chaîne selon l'une quelconque des revendications 4 ou 5, **caractérisé en ce que** l'élément profilé (3', 3", 3"') est conformé en deux ou plusieurs pièces et peut être séparé dans la zone des évidements (6) pour recevoir les éclisses (7,8) des maillons de la chaîne (1, 1',1").

7. Entraînement à chaîne selon l'une quelconque des revendications 1 à 6, **caractérisé en ce que** l'entraînement à chaîne ne comprend qu'une chaîne (1).

8. Entraînement à chaîne selon l'une quelconque des revendications 1 à 6, **caractérisé en ce que** l'entraînement à chaîne comprend deux ou plusieurs chaînes (1', 1") disposées parallèles.

9. Entraînement à chaîne selon les revendications 4 ou 5 et selon la revendication 8, **caractérisé en ce qu'**à chaque fois un élément profilé (3', 3", 3"') coopère avec des éclisses (7,8) de chacune des chaînes (1, 1', 1") disposées à l'opposé.

10. Entraînement à chaîne selon l'une quelconque des revendications 1 à 9, **caractérisé en ce que** l'élément de renforcement (2) est disposé sur une partie de la chaîne (1, 1', 1") au moins en prise avec au moins un moyen d'entraînement (10), tel qu'une roue dentée à chaîne ou similaire.

11. Entraînement à chaîne selon la revendication 10, **caractérisé en ce que** l'on prévoit deux ou plusieurs moyens d'entraînement (10), en particulier des roues dentées à chaîne.

12. Entraînement à chaîne selon la revendication 11, **caractérisé en ce que** la transmission ne comprend qu'une chaîne (1) et **en ce que** deux ou plusieurs moyens d'entraînement (10) coopérant avec la chaîne (1), en particulier des roues dentées à chaîne, sont disposés l'un derrière l'autre.

13. Entraînement à chaîne selon la revendication 11, **caractérisé en ce que** la transmission comprend deux ou plusieurs chaînes (1', 1") et **en ce qu'**à chaque fois au moins un moyen d'entraînement (10), en particulier une roue dentée à chaîne, coopère avec chacune des chaînes (1', 1"), les moyens d'entraînement (10) étant disposés parallèles.

14. Entraînement à chaîne selon l'une quelconque des revendications 11 à 13, **caractérisé en ce que** les moyens d'entraînement (10), en particulier des roues dentées à chaîne, sont synchrones.

15. Entraînement à chaîne selon la revendication 14, **caractérisé en ce qu'**à chaque moyen d'entraînement (10) est associé une commande séparée, et **en ce que** les commandes sont synchrones.

16. Entraînement à chaîne selon l'une quelconque des revendications 11 à 15, **caractérisé en ce que** les moyens d'entraînement (10) sont constitués par des roues dentées à chaîne, au moins deux roues dentées coopérant avec la chaîne (1, 1', 1") sous une rotation relative (α/2) les unes par rapport aux autres qui correspond sensiblement à la mesure d'un arc de la moitié de la longueur d'une dent des roues dentées dans le sens périphérique de celles-ci.

17. Entraînement à chaîne selon l'une quelconque des revendications 1 à 16, **caractérisé en ce que** l'élément de renforcement (2) présente une direction d'extension sensiblement linéaire.

18. Dispositif d'actionnement pour commander des éléments constructifs pouvant être actionnés d'un mouvement alternatif, tels que des plates-formes, des plates-formes de levage, des échelles de levage, des chariots, des grues, des portails ou similaires, **caractérisé par** au moins un entraînement à chaîne selon l'une quelconque des revendications 1 à 17.
